(19) Europäisches Patentamt
European Patent Office
Office européen des brevets

(11) Veröffentlichungsnummer: **0 186 628**
**B1**

# (12) EUROPÄISCHE PATENTSCHRIFT

(45) Veröffentlichungstag der Patentschrift:
**13.12.89**

(51) Int. Cl.⁴: **C07F 9/15**, C08K 5/52, C08L 23/00, C09K 15/32

(21) Anmeldenummer: **85810606.5**

(22) Anmeldetag: **17.12.85**

## (54) Pentaerythritdiphosphite, Verfahren zu deren Herstellung und deren Verwendung als Stabilisatoren.

(30) Priorität: **24.12.84 US 685370**

(43) Veröffentlichungstag der Anmeldung:
**02.07.86 Patentblatt 86/27**

(45) Bekanntmachung des Hinweises auf die Patenterteilung:
**13.12.89 Patentblatt 89/50**

(84) Benannte Vertragsstaaten:
**BE DE FR GB IT NL**

(56) Entgegenhaltungen:
**EP-A- 0 038 876**
**US-A- 2 847 443**
**US-A- 4 180 498**

(73) Patentinhaber: **CIBA-GEIGY AG, Klybeckstrasse 141, CH-4002 Basel(CH)**

(72) Erfinder: **Spivack, John D., 1 Blue Jay Street, Spring Valley New York 10977(US)**

EP 0 186 628 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Polymere organische Materialien wie Kunststoffe und Harze unterliegen thermischem, oxydativem und Lichtabbau. Die verschiedensten Stabilisatoren sind aus dem Stand der Technik zur Stabilisierung einer Reihe von Substraten bekannt. Deren Wirksamkeit variiert je nach den Ursachen des Abbaus und dem stabilisierten Substrat. Im allgemeinen ist es schwierig vorauszusagen, welcher Stabilisator am wirksamsten und wirtschaftlichsten für ein bestimmtes Anwendungsgebiet ist. Beispielsweise kann die Wirksamkeit eines Stabilisators bei der Verringerung der Flüchtigkeit davon abhängen, ob eine Spaltung von Bindungen im Substratmolekül verhindert wird. Eine Reduzierung der Versprödung und Beibehaltung der Elastizität in einem Polymeren kann es erforderlich machen, übermässige Vernetzung und/oder Kettenspaltung zu verhüten. Um Verfärbung zu verhindern, kann es nötig sein, Reaktionen zu hemmen, die neue Chromophore oder Farbkörper im Substrat oder Stabilisator liefern. Ebenfalls sind Verarbeitungsstabilitäts- und Unverträglichkeitsprobleme in Betracht zu ziehen.

Verschiedene Pentaerythritdiphosphitstabilisatoren sind aus dem Stand der Technik bekannt. Bis-(phenyl)-pentaerythritdiphosphite wurden in frühen Patenten wie dem U.S. Patent 2 847 443 und dem britischen Patent 1 180 398 offenbart. Eine Zusammenfassung solcher Diphosphite findet sich in U.S. Patenten 4 302 383 und 4 305 866, wo verschiedene Bis-(alkyl)-, -(phenyl)-und-(alkylphenyl)-pentaerythritdiphosphite angegeben sind.

Im U.S. Patent 4 180 498 sind Bis-(ester-phenyl)-pentaerythritdiphosphite gattungsmässig offenbart und beansprucht. Die Estergruppierung wird durch die Bezeichnung "$-(A)q-COOR_4$" beschrieben, worin A für $C_1$-$C_3$-Alkylen, q für 0 oder 1 und $R_4$ für $C_1$-$C_{24}$-alkyl-, phenyl- oder alkylsubstituiertes Phenyl stehen. Es werden keine speziellen Beispiele für solche Verbindungen gegeben, und die Monoesterverbindungen sind die nächstliegenden konkret offenbarten Verbindungen. Es wird angegeben, dass diese Verbindungen fähig sind, organische Materialien gegen thermischen, oxydativen und UV-Licht-Abbau zu stabilisieren.Die Monoester zeigen zwar eine solche Aktivität, doch verlangen industrielle Anforderungen eine verbesserte Leistung bezüglich der Aktivität als Antioxydans und der durch andauernde Gegenwart und hydrolytische Beständigkeit des Stabilisators bedingten Langzeitwirkung.

Dementsprechend ist es die Hauptaufgabe dieser Erfindung, eine ausgewählte Klasse von Bis-(ester-phenyl)-pentaerythritdiphosphiten aufzufinden und zur Verfügung zu stellen, welche einen weiten Bereich stabilisierender Eigenschaften aufweisen.

Noch eine weitere Aufgabe besteht darin, ein wirtschaftliches und wirksames Verfahren zur Herstellung von Pentaerythritdiphosphiten einschliesslich der erfindungsgemässen Verbindungen zu entwickeln.

Verschiedene weitere Aufgaben und Vorteile dieser Erfindung sind aus deren nachstehender Beschreibung ersichtlich.

Es wurde gefunden, dass die Bis-(ester-phenyl)-pentaerythritdiphosphite mit entweder $C_1$ - oder $C_{12}$-$C_{18}$-Estersubstituenten eine Reihe wünschenswerter Eigenschaften aufweisen, welche sie zu besonders wirksamen und nützlichen Stabilisatoren in den verschiedensten Substraten machen. Vor allem besitzen diese Verbindungen eine ausgezeichnete Aktivität als Antioxydans in verschiedenen Substraten, ergeben in ihrer länger andauernden Gegenwart im Substrat eine verlängerte Wirkungsdauer und weisen erhöhte Hydrolysebeständigkeit auf. Die letztere Eigenschaft ist besonders bedeutsam in Anbetracht der heissen und feuchten Lagerungsbedingungen, denen im Handel befindliche chemische Verbindungen häufig unterliegen. Besonders unter diesen Gesichtspunkten zeigen die erfindungsgemässen Verbindungen verbesserte Eigenschaften, verglichen mit den im U.S. Patent 4 180 498 offenbarten Monoestern.

Ferner wurde gefunden, dass die Gegenwart katalytischer Mengen an Mono- oder Polyalkylenglykoläthern als Komplexbildner während der Umsetzung des entsprechenden Alkohols oder Phenols mit 3,9-Dichlor-2,4,8,10-tetraoxa-3,9-diphosphaspiro[5,5]undecan zu Pentaerythritdiphosphiten zu einem verbesserten Herstellungsverfahren führt. Die Produktausbeuten werden dabei erhöht. Das Verfahren ist deshalb ebenfalls zweckmässig für die glatte Umsetzung phenolischer, durch ortho-Alkylgruppen stark gehinderter Gruppen.

Die erfindungsgemässen Verbindungen entsprechen der Formel

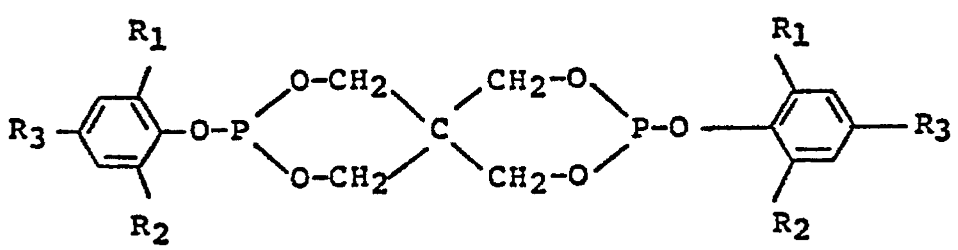

worin $R_1$ und $R_2$ unabhängig voneinander Alkyl mit 1 bis 8 Kohlenstoffatomen, $R_3$ $A-COOR_4$, A eine direkte Bindung, Methylen oder Aethylen und $R_4$ Methyl oder Alkyl mit 12 bis 18 Kohlenstoffatomen bedeuten.

Die Gruppen $R_1$ und $R_2$ sind vorzugsweise geradkettiges oder verzweigtes Alkyl mit 4 bis 8 Kohlenstoffatomen wie n-Butyl, sek.-Butyl, tert.-Butyl, tert.-Pentyl, 2-Aethyl-hexyl, n-Octyl und tert.-Octyl. Die Gruppen tert.-Butyl, tert.-Pentyl und tert.-Octyl werden dabei besonders bevorzugt.

Vorzugsweise ist A Aethylen und $R_4$ Methyl, bzw. Dodecyl oder Octadecyl.

Die erfindungsgemässen Verbindungen werden vorzugsweise dadurch hergestellt, dass man das entsprechende, 2,6-disubstituierte Phenol mit 3,9-Dichlor-2,4,8,10-tetraoxa-3,9-diphosphaspiro[5,5]undecan umsetzt. Es hat sich aber gezeigt, dass man bei diesem Verfahren nur mässige Ausbeuten erhält, selbst wenn das Phenol als Phenolatanion in Gegenwart eines polaren aprotischen Lösungsmittels wie Tetrahydrofuran umgesetzt wird. Ferner ist eine höhere Aktivität erforderlich, wenn die phenolischen Gruppen durch zwei ortho-Alkylgruppen wie tertiäre Alkylgruppen stark gehindert sind.

Ein weiterer Gegenstand dieser Erfindung ist dementsprechend eine verbesserte Herstellungsweise für Pentaerythritdiphosphite im allgemeinen und die vorliegenden Diphosphite im besonderen, wobei die obigen Reaktionspartner in Gegenwart mindestens einer katalytisch wirksamen Menge eines Mono- oder Polyalkylenglykolätherkatalysators umgesetzt werden, der die Reaktionsfähigkeit des Phenolatanions erhöht und mit Gegenionen Komplexe bildet.

Die Reaktion lässt sich durch die Gleichung

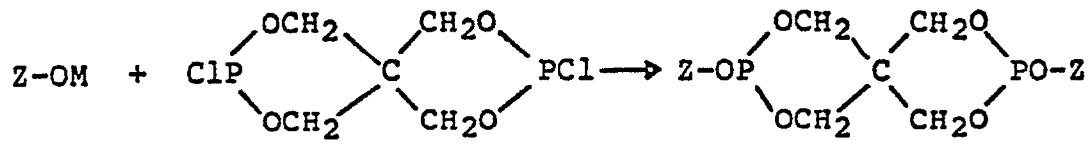

darstellen, worin Z für Alkyl, Alkenyl, Cycloalkyl, Aryl Alkylaryl, Aralkyl oder alkanoylsubstituiertes Aryl steht, wobei diese Gruppen jeweils gegebenenfalls durch Hydroxyl, Alkoxy oder Halogen substituiert sind, und M Wasserstoff oder ein Alkali-oder Erdalkalimetall bedeutet, wobei ein Alkalimetall bevorzugt ist.

Das erfindungsgemässe Verfahren zur Herstellung von Pentaerythritdiphosphiten der Formel

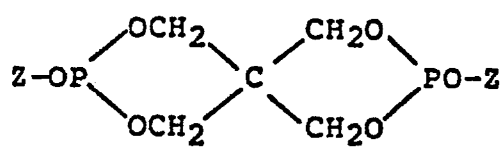

worin Z Alkyl, Alkenyl, Aryl, Alkylaryl, Aralkyl oder alkanoyl-substituiertes Aryl bedeutet, wobei diese Gruppen jeweils gegebenenfalls durch Hydroxy, Alkoxy oder Halogen substituiert sind, durch Umsetzung einer Verbindung der Formel Z-OM, worin M Wasserstoff oder ein Alkali- oder Erdalkalimetall darstellt, mit 3,9-Dichlor-2,4,8,10-tetraoxa-3,9-diphosphaspiro[5,5]undecan in Gegenwart eines Lösungsmittels und einer starken Base, ist dadurch gekennzeichnet, dass die Reaktion in Gegenwart einer katalytischen Menge eines Mono- oder Polyalkylenglykolätherkatalysators erfolgt.

Z-OM bedeutet vorzugsweise

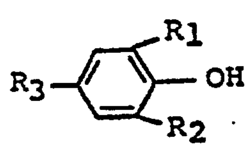

worin $R_1$ und $R_2$ unabhängig voneinander Alkyl mit 1 bis 8 Kohlenstoffatomen, $R_3$-A-$COOR_4$, A eine direkte Bindung, Methylen oder Aethylen und $R_4$ Methyl oder Alkyl mit 12 bis 18 Kohlenstoffatomen bedeuten.

Aryl bedeutet dabei vorzugsweise Phenyl oder Naphthyl, insbesondere Phenyl. Alkylgruppen weisen z.B. 1 bis 22, insbesondere 1-18 C-Atome, Alkenylgruppen z.B. 2-18 C-Atome auf. Bevorzugtes Aralkyl ist Benzyl. Beispiele für Alkanoylgruppen sind solche der Formel -A-$COOR_4$. Alkoxy ist z.B. $C_1$-$C_8$, insbesondere $C_1$-$C_4$-Alkoxy.

Typische, neben den erfindungsgemässen herstellbare Verbindungen sind unter anderem Diphenylpentaerythritdiphosphit, Di-p-tolylpentaerythritdiphosphit, Methylstearylpentaerythritdiphosphit, Di-2,4-xylenylpentaerythritdiphosphit, Di-t-butylphenylpentaerythritdiphosphit, Methyloleylpentaerythritdiphosphit, Dimethylpentaerythritdiphosphit, Diäthylpentaerythritdiphosphit, Phenyl-p-nonylphenylpentaerythritdiphosphit, Dihexylpentaerythritdiphosphit, Dicyclohexylpentaerythritdiphosphit, Phenyl-o-dodecylphenylpentaerythritdiphosphit, Didecylpentaerythritdiphosphit, Diisodecylpentaerythritdiphosphit, Methyleikosanylpentaerythritdiphosphit, Methyloctylpentaerythritdiphosphit, Di-2-chloräthylpentaerythritdiphosphit, Phenyl-2,4-di-(nonyl)-phenyl-pentaerythritdiphosphit, Di-2-chloropropylpentaerythritdiphosphit, Di-(4-chlorphenyl)-pentaerythritdiphosphit, Di-(3-chlorphenyl)-pentaerythritdiphosphit, Di-(2-chlorphenyl)-pentaerythritdiphosphit, Diallylpentaerythritdiphosphit, Di-(2-decenyl)-pentaerythritdiphosphit und Di-(2,4-dibutyl-phenyl)-pentaerythritdiphosphit.

Die Herstellung des Dichlorreaktionspartners ist aus dem Stand der Technik bakannt und verläuft im allgemeinen durch Umsetzung von Pentaerythrit und Phosphortrichlorid im Molverhältnis 1:2 bis 1:3 in Gegenwart eines inerten unpolaren Lösungsmittels sowie gegebenenfalls eines Amidkatalysators. Zu typischen Lösungsmitteln gehören aromatische Kohlenwasserstoffe wie Benzol, Toluol, Xylol und dergleichen, während Dimethylformamid, Dimethylacetamid und 1-Methyl-2-pyrrolidon Beispiele typischer Amide darstellen.

Das erfindungsgemässe Verfahren wird beispielsweise so durchgeführt, dass man eine Lösung des Z-OM-Reaktionspartners bildet, eine starke Base und den Mono- oder Polyalkylenglykoläther zusetzt, die Lösung bei Raumtemperatur hält oder höchstens auf eine Temperatur von 40-60°C erhitzt, das Dichlorpentaerythritdiphosphit im allgemeinen in gelöster Form (Isolierung des Materials ist unnötig) zusetzt, die Umsetzung bei einer Temperatur von etwa 25 bis 50°C für einen Zeitraum von im allgemeinen etwa 1 bis 16 Stunden ablaufen lässt und das Produkt isoliert.

Die Reaktionspartner liegen im allgemeinen in ungefähr stöchiometrischen Mengen vor. Der Glykolätherkatalysator wird zweckmässig in Mengen im Bereich von 1 bis 30 Mol %, bezogen auf den Phenolreaktionspartner, und vorzugsweise 5 bis 20 Mol %, eingesetzt.

Als Katalysatoren sind z.B. Mono- und Polyalkylenglykoläther geeignet, die der Formel

$$R_5(OCH(R_6)(CH_2)_n\,CH_2)_m\,OR_7$$

entsprechen, worin $R_5$, $R_6$ und $R_7$ unabhängig voneinander für Wasserstoff oder Alkyl mit 1 bis 8 Kohlenstoffatomen stehen, mit der Massgabe, dass höchstens eines der Symbole $R_5$ und $R_7$ Wasserstoff bedeutet, und n 0, 1 oder 2 und m eine Zahl von 1 bis 9, vorzugsweise 2 bis 5, bedeuten.

Als Mono- und Polyalkylenglykoläther eignen sich beispielsweise Aethylenglykolmonoäthyläther, Aethylenglykoldimethyläther, Diäthylenglykoldiäthyläther, Triäthylenglykoldibutyläther, Tripropylenglykoldimethyläther, Tetraäthylenglykoldimethyläther, Tetraäthylenglykoldiäthyläther und Pentaäthylenglykolmonoäthyläther. Bei Natrium oder Kalium als Gegenionen werden Triäthylenglykoldimethyläther und Tetraäthylenglykoldimethyläther bevorzugt.

Wie oben erwähnt werden starke Basen zur Umwandlung des Phenols in Phenolationen bevorzugt. Dabei kann man Metall- und Ammoniumhydroxyde, Hydride und Amide verwenden. Die Hydroxydbasen sind jedoch weniger vorteilhaft im Fall, dass das Phenol eine hydrolysierbare Estergruppe trägt, so dass die Bildung des Phenolatanions von Verseifung der Estergruppe begleitet würde. Natriumhydrid erweist sich als besonders zweckmässig in Fällen von hydrolyseanfälligen Estergruppen.

Als Lösungsmittel kommen unter anderem z.B. aromatische Kohlenwasserstoffe wie Benzol, Toluol, Xylol und dergleichen oder heterocyclische Aether wie Tetrahydrofuran in Frage.

Erfindungsgemässe Verbindungen sind besonders wirksam zur Stabilisierung organischer Materialien wie Kunststoffe, Polymere und Harze sowie auch Mineral- und Syntheseflüssigkeiten wie Schmieröle, Umlauföle usw.

Zu Substraten, in denen die erfindungsgemässen Verbindungen besonders nützlich sind, zählen Polyolefine wie Polyäthylen und Polypropylen, Polystyrol, insbesondere einschliesslich schlagzähem Polystyrol, ABS-Harz und Elastomere wie zum Beispiel Butadienkautschuk, EPM-, EPDM-, SBR-und Nitrilkautschuk.

Zu stabilisierende Polymere sind im allgemeinen unter anderem:

1. Mono- und Diolefinpolymere, z.B. gegebenenfalls vernetztes Polyäthylen sowie Polypropylen, Polyisobutylen, Polybuten-1, Polymethylpenten-1, Polyisopren und Polybutadien, und auch Polymere von Cycloolefinen wie Cylcopenten oder Norbornen.

2. Gemische der unter 1. angeführten Polymeren, zum Beispiel Gemische aus Polypropylen und Polyisobutylen.

3. Copolymere der Mono- und Diolefine miteinander oder mit anderen Vinylmonomeren, wie Aethylen/Propylen-, Propylen/Buten-1-, Propylen/Isobutylen-, Aethylen/Buten-1-, Propylen/Butadien-, Isobutylen/Isopren-, Aethylen/Alkyl-acrylat-, Aethylen/Alkylmethacrylat-, Aethylen/Vinylacetat- oder Aethylen/Acrylsäurecopolymere und deren Salze (Ionomere) sowie Terpolymere des Aethylens und Propylens mit einem Dien wie Hexadien, Dicylcopentadien oder Aethylidennorbornen.

4. Polystyrol und Poly-p-methylstyrol.

5. Copolymere des Styrols und Methylstyrols mit Dienen oder Acrylderivaten, zum Beispiel Styrol/Butadien, Styrol/Acrylnitril, Styrol/Aethylmethacrylat, Styrol/Butadien/Aethylacrylat und Styrol/Acrylnitril/Methacrylat, hoch schlagzähe Gemische aus Styrolcopolymeren und einem weiteren Polymeren wie z.B. einem Polyacrylat, Dienpolymer oder Aethylen/Propylen/Dienterpolymer, sowie Blockpolymere des Styrols wie beispielsweise Styrol/Butadien/Styrol, Styrol/Isopren/Styrol, Styrol/Aethylen/Butylen/Styrol oder Styrol/Aethylen/Propylen/Styrol.

6. Pfropfcopolymere des Styrols wie beispielsweise Styrol auf Polybutadien, Styrol und Acrylnitril auf Polybutadien, Styrol und Alkylacrylate oder Methacrylate auf Polybutadien, Styrol und Acrylnitril auf Aethylen/Propylen/Dienterpolymeren, Styrol und Acrylnitril auf Polyacrylaten oder Polymethacrylaten, Styrol und Acrylnitril auf Acrylat/Butadiencopolymeren sowie deren Gemische mit den unter 5. angeführten Copolymeren, zum Beispiel die als ABS-, MBS-, ASA- oder AES-Polymere bekannten Copolymergemische.

7. Halogenhaltige Polymere wie Polychloropren, chlorierte Kautschuktypen, chloriertes oder sulfochloriertes Polyäthylen, Epichlorhydrinhomo- und -copolymere, Polymere halogenhaltiger Vinylverbindungen wie zum Beispiel Polyvinylchlorid, Polyvinylidenchlorid, Polyvinylfluorid, Polyvinylidenfluorid sowie deren Copolymere wie z.B. Vinylchlorid/Vinylidenchlorid-, Vinylchlorid/Vinylacetat- oder Vinylidenchlorid/Vinylacetatcopolymere.

8. Sich von α,β-ungesättigten Säuren und deren Derivaten ableitende Polymere wie Polyacrylate und Polymethacrylate, Polyacrylamid und Polyacrylnitril.

9. Copolymere aus den unter 8. angeführten Monomeren miteinander oder mit anderen ungesättigten Monomeren, wie zum Beispiel Acrylnitril/Butadien-, Acrylnitril/Alkylacrylat-, Acrylnitril/Alkoxyalkylacrylat- oder Acrylnitril/Vinylhalogenidcopolymere oder Acrylnitril/Alkylmethacrylat/Butadienterpolymere.

10. Sich von ungesättigten Alkoholen und Aminen oder deren Acylderivaten bzw. Acetalen ableitende Polymere, wie Polyvinylalkohol, Polyvinylacetat, Polyvinylstearat, Polyvinylbenzoat, Polyvinylmaleinat, Polyvinylbutyral, Polyallylphthalat oder Polyallylmelamin.

11. Homopolymere und Copolymere cyclischer Aether, wie Polyalkylenglykole, Polyäthylenoxyd, Polypropylenxoyd oder deren Copolymere mit Bisglycidyläthern.

12. Polyacetale, wie Polyoxymethylen sowie Aethylenoxyd als Comonomer enthaltende Polyoxymethylene.

13. Polyphenylenoxyde und -sulfide sowie Gemische von Polyphenylenoxyden mit Polystyrol.

14. Sich von Polyäthern, Polyestern oder Polybutadienen ableitende Polyurethane mit endständigen Hydroxylgruppen auf einer Seite und aliphatischen oder aromatischen Polyisocyanaten auf der anderen Seite, sowie deren Vorstufen (Polyisocyanate, Polyole oder Präpolymere).

15. Sich von Diaminen und Dicarbonsäuren und/oder Aminocarbonsäuren bzw. den entsprechenden Lactamen ableitende Polyamide und Copolyamide, wie zum Beispiel Polyamid-4, Polyamid-6, Polyamid-6/6, Polyamid-6/10, Polyamid-11, Polyamid-12, Poly-2,4,4-trimethylhexamethylen-terephthalamid oder Poly-m-phenylenisophthalamid sowie deren Copolymere mit Polyäthern wie beispielsweise mit Polyäthylenglykol, Polypropylenglykol oder Polytetramethylenglykolen.

16. Polyharnstoffe, Polyimide und Polyamid-imide.

17. Sich von Dicarbonsäuren und Diolen und/oder Hydroxycarbonsäuren bzw. den entsprechenden Lactonen ableitende Polyester, wie Polyäthylenterephthalat, Polybutylenterephthalat, Poly-1,4-dimethylol-cyclohexanterephthalat, Poly-[2,2-(4-hydroxyphenyl)-propan]-terephthalat und Polyhydroxybenzoate sowie sich von Polyäthern mit Hydroxylendgruppen ableitende Blockcopolyäther-ester.

18. Polycarbonate.

19. Polysulfone, Polyäthersulfone und Polyätherketone.

20. Sich einerseits von Aldehyden und andererseits von Phenolen, Harnstoffen und Melaminen ableitende vernetzte Polymere, wie z.B. Phenol/Formaldehyd-, Harnstoff/Formaldehyd- und Melamin/Formaldehydharze.

21. Trocknende und nicht-trocknende Alkydharze.

22. Sich von Copolyestern gesättigter und ungesättigter Dicarbonsäuren mit mehrwertigen Alkoholen sowie Vinylverbindungen als Vernetzungsmittel ableitende ungesättigte Polyesterharze und auch deren halogenhaltige flammwidrige Modifikationen.

23. Duroplastische Acrylharze, die sich von substituierten Acrylestern wie Epoxyacrylaten, Urethanacrylaten oder Polyesteracrylaten ableiten.

24. Alkydharze, Polyesterharze oder Acrylatharze im Gemenge mit Melaminharzen, Harnstoffharzen, Polyisocyanaten oder Epoxidharzen als Vernetzungsmittel.

25. Vernetzte Epoxidharze, die sich von Polyepoxiden z.B. Bisglycidyläthern oder cycloaliphatischen Diepoxiden ableiten.

26. Natürliche Polymere, wie Cellulose, Kautschuk, Gelatine sowie deren chemisch polymerhomolog abgeänderte Derivate, z.B. Celluloseacetate, Cellulosepropionate und Cellulosebutyrate und Celluloseäther wie Methylcellulose.

27. Gemische von oben erwähnten Polymeren, zum Beispiel PP/EPDM, Polyamid-6/EPDM oder ABS, PVC/EVA, PVC/ABS, PVC/MBS, PC/ABS oder PBTP/ABS.

28. Natürlich vorkommende und synthetische organiische Stoffe, die reine monomere Verbindungen oder Gemische solcher Verbindungen darstellen, beispielsweise Mineralöle, tierische und pflanzliche Fette, Oele und Wachse oder Oele, Fette und Wachse auf Grundlage synthetischer Ester (z.B. Phthalate, Adipate, Phosphate oder Trimellithate) sowie Gemische synthetischer Ester mit Mineralölen in verschiedenen Gewichtsverhältnissen, wobei diese Stoffe als Weichmacher für Polymere oder als Textilspinnöle verwendbar sind, sowie wässrige Emulsionen solcher Stoffe.

29. Wässrige Emulsionen von Natur- oder Synthesekautschuk, z.B. natürlicher Latex oder Latexe aus carboxylierten Styrol/Butadiencopolymeren.

Im allgemeinen werden die erfindungsgemässen Stabilisatoren in Mengen von etwa 0,01 bis etwa 5 Gew.-% der stabilisierten Zusammensetzung eingesetzt, doch schwankt dies in Abhängigkeit von dem jeweiligen Substrat und dem Anwendungszweck. Ein vorteilhafter Bereich erstreckt sich von etwa 0,5 bis etwa 2% und insbesondere von 0,1 bis etwa 1%.

Die erfindungsgemässen Stabilisatoren lassen sich leicht nach herkömmlichen Methoden in jeder zweckmässigen Stufe vor der Herstellung von Formkörpern daraus in die organischen Polymeren einarbeiten. Zum Beispiel kann man den Stabilisator mit dem Polymer in trockener Pulverform mischen oder eine Suspension oder Emulsion des Stabilisators mit einer Lösung, Suspension oder Emulsion des Polymeren vermischen. Die erfindungsgemässen stabilisierten Polymerzusammensetzungen können gegebenenfalls auch verschiedene herkömmliche Zusatzstoffe wie die folgenden enthalten.

1. Antioxydantien

1.1. Alkylierte Monophenole wie zum Beispiel 2,6-Di-tert.-butyl-4-methylphenol, 2-tert.-Butyl-4,6-dimethylphenol, 2,6-Di-tert.-butyl-4-äthylphenol, 2,6-Di-tert.-butyl-4-n-butyl-phenol, 2,6-Di-tert.-butyl-4-isobutylphenol, 2,6-Di-cyclopentyl-4-methylphenol, 2-(α-Methylcyclohexyl)-4,6-dimethylphenol, 2,6-Dioctadecyl-4-methylphenol, 2,4,6-Tricyclohexylphenol und 2,6-Di-tert.-butyl-4-methoxymethylphenol.

1.2. Alkylierte Hydrochinone wie zum Beispiel 2,6-Di-tert.-butyl-4-methoxyphenol, 2,5-Di-tert.-butylhydrochinon, 2,5-Di-tert.-amyl-hydrochinon und 2,6-Diphenyl-4-octadecyloxyphenol.

1.3. Hydroxylierte Thiodiphenyläther wie zum Beispiel 2,2'-Thio-bis-(6-tert.-butyl-4-methylphenol), 2,2'-Thio-bis-(4-octylphenol), 4,4'-Thio-bis-(6-tert.-butyl-3-methylphenol) und 4,4'-Thio-bis-(6-tert.-butyl-2-methylphenol).

1.4. Alkyliden-bisphenole wie zum Beispiel 2,2'-Methylen-bis-(6-tert.-butyl-4-methylphenol), 2,2'-Methylen-bis-(6-tert.-butyl-4-äthylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methyl-phenol), 2,2'-Methylen-bis-[6-(α-methylbenzyl)-4-nonylphenol], 2,2'-Methylen-bis-[6-(α,α-dimethylbenzyl)-4-nonylphenol], 2,2'-Methylen-bis-(4,6-di-tert.-butylphenol), 2,2'-Aethyliden-bis-(4,6-di-tert.-butylphenol), 2,2'-Aethyliden-bis-(6-tert.-butyl-4-isobutylphenol), 4,4'-Methylen-bis-(2,6-di-tert.-butylphenol), 4,4'-Methylen-bis-(6-tert.-butyl-2-methylphenol), 1,1-Bis-(5-tert.-butyl-4-hydroxy-2-methylphenylbutan), 2,6-Di-(3-tert.-butyl-5-methyl-2-hydroxybenzyl)-4-methylphenol, 1,1,3-Tris-(5-tert.-butyl-4-hydroxy-2-methylphenyl)-butan, 1,1-Bis-(5-tert.-butyl-4-hydroxy-2-methylphenyl)-3-n-dodecylmercaptobutan, Aethylenglykol-bis-[3,3-bis-(3'-tert.-butyl-4'-hydroxyphenyl)-butyrat], Di-(3-tert.-butyl-4-hydroxy-5-methylphenyl)-dicyclopentadien und Di-[2-(3'-tert.-butyl-2'-hydroxy-5'-methylbenzyl)-6-tert.-butyl-4-methylphenyl]-terephthalat.

1.5. Benzylverbindungen wie zum Beispiel 1,3,5-Tri-(3,5-di-tert.-butyl-4-hydroxybenzyl)-2,4,6-trimethylbenzol, Di-(3,5-di-tert.-butyl-4-hydroxybenzyl)sulfid, 3,5-Di-tert.-butyl-4-hydroxybenzylmercaptoessigsäureisooctylester, Bis-(4-tert.-butyl-3-hydroxy-2,6-dimethylbenzyl)-dithiolterephthalat, 1,3,5-Tris-(3,5-di-tert.-butyl-4-hydroxybenzyl)isocyanurat, 1,3,5-Tris-(4-tert.-butyl-3-hydroxy-2,6-dimethylbenzyl)-isocyanurat, 3,5-Di-tert.-butyl-4-hydroxybenzylphosphonsäuredioctadecylester und das Calciumsalz des 3,5-Di-tert.-butyl-4-hydroxybenzylphosphonsäure-monoäthylesters.

1.6. Acylaminophenole wie zum Beispiel 4-Hydroxy-laurinsäureanilid, 4-Hydroxy-stearinsäureanilid, 2,4-Bis-octyl-mercapto-6-(3,5-tert.-butyl-4-hydroxyanilino)-s-triazin und Octyl-N-(3,5-di-tert.-butyl-4-hydroxyphenyl)-carbamat.

1.7. Ester der β -(3,5-Di-tert.-butyl-4-hydroxyphenyl)-propionsäure mit einwertigen oder mehrwertigen Alkoholen wie zum Beispiel mit Methanol, Octadecanol, 1,6-Hexandiol, Neopentylglykol, Thiodiäthylenglykol, Diäthylenglykol, Triäthylenglykol, Pentaerythrit, Tris-hydroxyäthylisocyanurat und Dihydroxyäthyloxalsäurediamid.

1.8. Ester der β-(5-tert.-Butyl-4-hydroxy-3-methylphenyl)-propionsäure mit einwertigen oder mehrwertigen Alkoholen wie zum Beispiel Methanol, Octadecanol, 1,6-Hexandiol, Neopentylglykol, Thiodiäthylenglykol, Diäthylenglykol, Triäthylenglykol, Pentaerythrit, Trishydroxyäthylisocyanurat und Dihydroxyäthyloxalsäurediamid.

1.9. Amide der β-(3,5-Di-tert.-butyl-4-hydroxyphenyl)-propionsäure wie zum Beispiel N,N'-Di-(3,5-di-tert.-butyl-4-hydroxyphenylpropionyl)-hexamethylendiamin, N,N'-Di-(3,5-di-tert.-butyl-4-hydroxyphenylpropionyl)-trimethylendiamin und N,N'-Di(3,5-di-tert.-butyl-4-hydroxyphenylpropionyl)-hydrazin.

2. UV-Absorber und Lichtschutzmittel

2.1. 2-(2'-Hydroxyphenyl)-benztriazole wie zum Beispiel das 5'-Methyl-, 3',5'-Di-tert.-butyl-, 5'-tert.-Butyl-, 5'-(1,1,3,3-tetramethylbutyl)-, 5-Chlor-3',5'-di-tert.-butyl-, 5-Chlor-3'-tert.-butyl-5'-methyl-, 3'-sek.-Butyl-5'-tert.-butyl-, 4'-Octoxy, 3',5'-Di-tert.-amyl-, 3',5'-Bis-(α,α-dimethylbenzyl) derivat.

2.2. 2-Hydroxy-benzophenone wie zum Beispiel das 4-Hydroxy-, 4-Methoxy-, 4-Octoxy-, 4-Decyloxy-, 4-Dodecyloxy-, 4-Benzyloxy-, 4,2',4'-Trihydroxy- und 2'-Hydroxy-4,4'-dimethoxyderivat.

2.3. Ester gegebenenfalls substituierter Benzoesäuren wie zum Beispiel Phenylsalicylat, 4-tert.-Butyl-phenylsalicylat, Octylphenylsalicylat, Dibenzoylresorcin, Bis-(4-tert.-butyl-benzoyl)-resorcin, Benzoylresorcin, 3,5-Di-tert.-butyl-4-hydroxybenzoesäure-2, 4-di-tert.-butyl-phenylester und 3,5-Di-tert.-butyl-4-hydroxybenzoesäurehexadecylester.

2.4. Acrylate wie zum Beispiel α-Cyan-β,β-Diphenylacrylsäureäthylester oder-isooctylester, α-Carbomethoxyzimtsäuremethylester, α-Cyan-β-methyl-p-methoxyzimtsäuremethylester oder -butylester, α-Carbomethoxy-p-methoxyzimtsäuremethylester und N-(β-Carbomethoxy-β-cyanvinyl)-2-methylindolin.

2.5. Nickelverbindungen wie zum Beispiel Nickelkomplexe des 2,2'-Thio-bis-[4-(1,1,3,3-tetramethylbutyl)-phenols] wie der 1:1- oder 1:2-Komplex gegebenenfalls mit weiteren Liganden wie n-Butylamin, Triäthanolamin oder N-Cyclohexyl-diäthanolamin, Nickel-dibutyldithiocarbamat, Nickelsalze von 4-Hydroxy-3,5-di-tert.-butylbenzylphosphonsäuremonoalkylestern wie dem Methyl-, Aethyl- oder Butylester, Nickelkomplexe von Ketoximen wie 2-Hydroxy-4-methylphenyl-undecylketoxim und Nickelkomplexe des 1-Phenyl-4-lauroyl-5-hydroxypyrazols, gegebenenfalls mit weiteren Liganden.

2.6. Sterisch gehinderte Amine wie zum Beispiel Bis-(2, 2,6,6-tetramethylpiperidyl)-sebacinat, Bis-(1,2,2,6,6-pentamethylpiperidyl)-sebacinat, n-Butyl-3,5-di-tert.-butyl-4-hydroxybenzylmalonsäure-bis-(1,2,2,6,6-pentamethylpiperidyl)-ester, die Kondensationsprodukte des 1-Hydroxyäthyl-2,2,6,6-tetramethyl-4-hydroxypiperidins mit Bernsteinsäure und des N,N'-(2,2,6,6-tetramethylpiperidyl)-hexamethylendiamins mit 4-tert.-Octylamino-2,6-dichlor-1,3,5-s-triazin, Tris-(2,2,6,6-tetramethylpiperidyl)-nitrilotriacetat, Tetrakis-(2,2,6,6-tetramethyl-4-piperidyl)-1,2,3,4-butantetracarbonsäure und 1,1'-(1,2-Aethandiyl)-bis-(3,3,5,5-tetramethylpiperazinon).

2.7. Oxalsäurediamide wie zum Beispiel 4,4'-Dioctyloxy oxanilid, 2,2'-Dioctyloxy-5,5'-di-tert.-butyloxanilid, 2,2'-Didodecyloxy-5,5'-di-tert.-butyl-oxanilid, 2-Aethoxy-2'-äthyl-oxanilid, N,N'-Bis-(3-dimethyl-aminopropyl)-oxalamid, 2-Aethoxy-5-tert.-butyl-2'-äthyl-oxanilid und dessen Gemisch mit 2-Aethoxy-2'-äthyl-5,4'-di-tert.-butyl-oxanilid und Gemische von o- und p-methoxy- sowie o- und p-äthoxy-disubstituierten Oxaniliden.

3.Metalldesaktivatorenwie zum Beispiel N,N'-Diphenyloxalsäurediamid, N-Salicylal-N'-salicylolhydrazin, N,N'-Bis-salicyloylhydrazin, N,N'-Bis-(3,5-di-tert.-butyl-4-hydroxyphenylpropionyl)-hydrazin, 3-Salicyloylamino-1,2,4-triazol, Bis-benzyliden-oxalsäuredihydrazid.

4. Phosphite und Phosphonite wie zum Beispiel Triphenylphosphit, Diphenylalkylphosphite, Phenyldialkylphosphite, Tri(nonylphenyl)-phosphit, Trilaurylphosphit, Trioctadecylphosphit, Distearyl-pentaerythritdiphosphit, Tris-(2,4-di-tert.-butylphenyl)-phosphit, Di-isodecylpentaerythritdiphosphit, Di-(2,4-di-tert.-butylphenyl)-pentaerythritdiphosphit, Tristearylsorbit-triphosphit und Tetrakis-(2,4-di-tert.-butylphenyl)-4,4'-diphenylendiphosphonit.

5. Peroxydzerstörende Verbindungen wie zum Beispiel Ester der β-Thiodipropionsäure, wie zum Beispiel die Lauryl-, Stearyl-, Myristyl- oder Tridecylester, Mercaptobenzimidazol oder das Zinksalz des 2-Mercaptobenzimidazols, Zink-dibutyl-dithio-carbamats, Dioctadecyldisulfids und Pentaerythrit-tetrakis-β-dodecylmercapto)-propionats.

6. Polyamidstabilisatoren wie zum Beispiel Kupfersalze kombiniert mit Jodiden und/oder Phosphorverbindungen und zweiwertigen Mangansalzen.

7. Basische Costabilisatoren wie zum Beispiel Melamin, Polyvinylpyrrolidon, Dicyandiamid, Triallylcyanurat, Harnstoffderivate, Hydrazinderivate, Amine, Polyamide, Polyurethane sowie Alkali- und Erdalkalisalze höherer Fettsäuren wie zum Beispiel Ca-Stearat, Zn-Stearat, Mg-Stearat, Na-Ricinoleat und K-Palmitat sowie Antimon- oder Zink-brenz-katechinat.

8. Keimbildungsmittel wie zum Beispiel 4-tert.-Butylbenzoesäure, Adipinsäure oder Diphenylessigsäure.

9. Füllstoffe und Verstärkungsmittel wie zum Beispiel Calciumcarbonat, Silicate, Glasfasern, Asbest, Talkum, Kaolin, Glimmer, Bariumsulfat, Metalloxyde und -hydroxyde, Russ und Graphit.

10. Weitere Zusatzstoffe wie zum Beispiel Weichmacher, Schmiermittel, Emulgatoren, Pigmente, optische Aufheller, Flammschutzmittel, Antistatika, Treibmittel und Thiosynergisten wie Dilaurylthiodipropionat oder Distearylthiodipropionat.

Die nachfolgenden Beispiele erläutern bevorzugte Ausführungsformen dieser Erfindung. Dabei sind Teile stets Gewichtsteile, falls nicht anders angegeben.

Beispiel 1

Bis-(2,6-di-tert.-butyl-4-octadecyloxycarbonyläthyl-phenyl)-pentaerythritdiphosphit

A) 3,9-Dichlor-2,4,8,10-tetraoxa-3,9-diphosphaspiro[5,5]undecan

7,1 g (0,051 Mo1) Pentaerythrit, 70 ml Toluol und 0,36 g Dimethylformamid werden unter Rühren in einem trockenen Reaktionskolben vorgelegt. Dann versetzt man die Suspension unter Rühren tropfenweise mit 18,3 g (0,133 Mo1) Phosphortrichlorid. Man rührt 5,5 Stunden lang unter Erhitzen auf 25-60°C, wonach die Umsetzung laut der entwickelten Menge HCl weitgehend vollständig ist. Ueberschüssiges

Phosphortrichlorid, Chlorwasserstoff und etwa 45 ml Toluol werden bei vermindertem Druck (15 bis 30 mm Hg) abgedampft.

B) Toluoldispersion des 3,5-Di-tert.-butyl-4-hydroxyhydrozimtsäure-n-octadecylester-Natriumsalzes

Man beschickt einen 75 ml Toluol enthaltenden Kolben mit 4,45 g (0,11 Mol) Natriumhydrid und 4,0 g (0,02 Mol) Tetraäthylenglykoldimethyläther. Dann versetzt man im Verlauf von 35 Minuten bei 15-20°C mit einer Lösung von 53,1 g 3,5-Di-tert.-butyl-hydroxyhydrozimtsäure-n-octadecylester in 80 ml trockenem Toluol. Die Temperatur wird innerhalb von 15 Minuten auf 40°C erhöht und weitere 1,5 Stunden lang gehalten. Dann kühlt man die Toluoldispersion ab.

C) Endprodukt

Das Zwischenprodukt (A) wird bei 5-10°C im Verlauf von 20 Minuten zum Zwischenprodukt (B) getropft. Man rührt zwei Stunden bei Raumtemperatur, säuert mit 1,6 g Essigsäure an und wäscht dreimal mit je 50 ml kaltem Wasser. Man trocknet die abgeschiedene organische Schicht mit Natriumsulfat und löst den isolierten Rückstand in 400 ml Isopropanol und lässt ihn in einem Eiswasserbad kristallisieren. Der Kristallbrei wird filtriert und der Filterkuchen mit kaltem Isopropanol gewaschen. Nach 4 Stunden langem Trocknen bei 50-60°C und 5-10 mm Hg erhält man 45 g weisses kristallines Pulver vom Schmelzpunkt 86-89°C.

Beispiel 2

Bis-(2,6-di-tert.-butyl-4-methoxycarbonyläthyl-phenyl)-pentaerythritdiphosphit

Man verfährt wie in Beispiel 1 beschrieben, jedoch unter Verwendung des 3,5-Di-tert.-butyl-4-hydroxyhydrozimtsäuremethylesters anstelle des Octadecylanalogen in Beispiel 1. Das Produkt aus Beispiel 2 wird als bei 235 bis 240°C schmelzende weisse Kristalle gewonnen.

Beispiel 3

Bis-(2,6-di-tert.-butyl-4-n-dodecyloxycarbonyläthyl-phenyl)-pentaerythritdiphosphit

Man verfährt wie in Biespiel 1 beschrieben, jedoch unter Verwendung des 3,5-Di-tert.-butyl-4-hydroxyhydrozimtsäure-n-dodecylesters anstelle des Octadecylanalogen in Beispiel 1. Das Produkt aus Beispiel 3 wird durch Kristallisieren aus Acetonitril als weisses kristallines Produkt vom Schmelzpunkt 78-81°C gewonnen.

Beispiel 4

Bis-(2,6-di-tert.-butyl-4-octadecyloxycarbonyl-phenyl)-pentaerythritdiphosphit

Man verfährt wie in Beispiel 1 beschrieben, jedoch unter Verwendung des 3,5-Di-tert.-butyl-4-hydroxybenzoesäure-n-octadecylesters anstelle der n-Octadecylverbindung in Beispiel 1. Das Produkt wird als weisse Kristalle vom Schmelzpunkt 84-99°C gewonnen.

Beispiel 5

Bis-(2,6-di-tert.-butyl-4-methoxycarbonyl-phenyl)-pentaerythritdiphosphit

Man verfährt wie in Beispiel 1 beschrieben, jedoch unter Verwendung des 3,5-Di-tert.-butyl-4-hydroxybenzoesäuremethylesters anstelle der n-Octadecylverbindung in Beispiel 1. Das Produkt wird als weisse Kristalle vom Schmelzpunkt 225-229°C gewonnen.

Beispiel 6

2-(2,6-Di-tert.-butyl-4-octadecyloxycarbonyläthyl-phenoxy)-5,5-dimethyl-1,3,2-dioxaphosphorinan (Stand der Technik)

Auf analoge Weise wie in Beispiel 1c beschrieben gibt man eine äquivalente Menge 2-Chlor-5,5-dimethyl-1,3,2-dioxaphosphorinan (0.07 Mol) zu einer Toluoldispersion des 3,5-Di-tert.-butyl-4-hydroxyhydrozimtsäure-n-octadecylester-Natriumsalzes (Beispiel 1B). Hierbei sind weitere 70 ml Toluol erforderlich, um ein bei 10°C rührbares Gemisch zu erhalten, welches man dann über Nacht bei Raumtemperatur reagieren lässt. Nach dem Ansäuern mit Essigsäure und Klärung durch Entfernung einer geringen Menge Unlöslichem entfernt man die Lösungsmittel durch Destillation bei vermindertem Druck, und der

Rohrückstand wird zweimal aus Aceton umkristallisiert, was bei 80-82°C schmelzende weisse Kristalle ergibt.

Beispiel 7

2-(2,6-Di-tert.-butyl-4-methoxycarbonyläthyl-phenoxy)5,5-di-methyl-1,3,2-dioxaphosphorinan (Stand der Technik)

Man verfährt analog wie für das Produkt in Beispiel 6, jedoch unter Verwendung des 3,5-Di-tert.-butyl-4-hydroxyhydrozimtsäuremethylesters anstelle des Octadecylanalogen in der Arbeitsweise nach Beispiel 6. Das Produkt aus Beispiel 7 wird als weisse Kristalle vom Schmelzpunkt 134-136°C gewonnen.

Beispiel 8

2-(2,6-Di-tert.-butyl-4-octadecyloxycarbonyläthyl-phenoxy)-1,3,2-dioxaphospholan (Stand der Technik)

Man verfährt analog zur Arbeitsweise nach Beispiel 1C durch Umsetzung von 2-Chlor-1,3,2-dioxaphospholan mit einer Toluoldispersion des 3,5-Di-tert.-butyl-4-hydroxyhydrozimtsäure-n-octadecylester-Natriumsalzes (Beispiel 1B). Nach Umkristallisieren aus Aceton gewinnt man die Verbindung aus diesem Beispiel als bei 54-56°C schmelzende weisse Kristalle.

Beispiel 9

Die oxydative Induktionszeit bestimmt man nach ASTM D-3895-80, abgeändert durch Verwendung einer Aluminiumpfanne anstelle einer Kupferpfanne.

Unstabilisiertes Polypropylenpulver (Hercules Profax 6501) wird gründlich mit 0,3 Gew.-% der verschiedenen Diphosphite vermischt und nach der ASTM-Methode D-3895-80 durch Erhitzen in einer Sauerstoffatmosphäre bei einem Sauerstoffmengenfluss von 50 ml/Minute und einer Temperatur von 200°C unter Verwendung eines mit DSC-Modul ausgerüsteten Thermoanalysators DuPont R-90 auf oxydative Stabilität geprüft. Die Zeit bis zum Versagen wird mittels der oxydativen Induktionszeit festgestellt.

Die Prüfergebnisse sind in der nachfolgenden Tabelle angegeben:

| Zusatzstoff | Oxydative Induktionszeit (Minuten) |
|---|---|
| Beispiel 1 | 10 |
| Beispiel 2 | 5 |
| Beispiel 6 | 1 |
| Beispiel 7 | 1 |

Die Ergebnisse zeigen die durch die erfindungsgemässen Verbindungen erreichte verbesserte Oxydationsstabilität.

Beispiel 10

Man gibt eine 10 mg-Probe Stabilisator in ein offenes Platinschiffchen und bestimmt für jede Probe die Temperatur (0°C) für 10% Gewichtsverlust unter einer Stickstoffatmosphäre in einem thermogravimetrischen Analysator DuPont 951.

| Beispiel | Temperatur für 10% Gewichtsverlust |
|---|---|
| 1 | 365 |
| 6 | 295 |

Bei dieser Prüfmethode erweist sich die erfindungsgemässe Verbindung wiederum als vorteilhaft.

Beispiel 11

Die Oxydationsstabilität wird an einem weiteren Substrat bestimmt, indem man 60 g der unten bezeichneten Grundformulierung, wie durch die angegebenen Zusatzstoffe modifiziert, in einen Brabender gibt

und bei 180°C mischt. Die Zeit bis zu einer Drehmomentzunahme wird als die Abbauzeit notiert, wobei höhere Zahlen bessere Leistung anzeigen. Die Prüfdaten sind in der nachfolgenden Tabelle angeführt:

| Grundformulierung | Teile |
|---|---|
| Polyvinylchloridharz | 100,0 |
| Methacrylsäure/esterverarbeitungshilfsmittel | 2,0 |
| Schlagzähmachender Acrylzusatzstoff | 7,0 |
| Calciumstearat | 0,8 |
| Polyäthylenwachs | 0,2 |
| Paraffinwachs | 1,0 |
| Zinnmercaptid | 2,0 |

| Zusatzstoff | Abbauzeit (Minuten) | % Drehmomentzunahme |
|---|---|---|
| 5 phr $TiO_2$ | 39,50 | 0,00 |
| 5 phr $TiO_2$ = 1 phr Bsp. 1 | 59,00 | 49,4 |
| 5 phr $TiO_2$ + 1 phr Bsp. 6 | 52,50 | 32,9 |

(phr = parts per hundred parts of resin = Teile auf hundert Teile Harz)

Beispiel 12

Die hydrolytische Stabilität wird mittels Dünnschichtchromatographie und gegebenenfalls Infrarotspektroskopie bestimmt. Man wägt eine 200 mg-Probe in eine Petrischale und setzt sie bei Raumtemperatur (ca. 25°C) einer Atmosphäre mit 80% relativer Feuchte aus. Nach Eintreten einer Gewichtszunahme um etwa 0,5% bus 1% wird eine Probe genommen, in Tetrachlorkohlenstoff zu einer Konzentration von 1% gelöst und durch Dünnschichtchromatographie und Infrarotspektroskopie untersucht, um die Menge noch vorhandenen Stabilisators zu bestimmen.

| Stabilisator | Zeit bis zur vollständigen Hydrolyse (Tage) |
|---|---|
| Beispiel 1 | Keine Hydrolyse in 260 Tagen |
| Beispiel 8 | Vollständige Hydrolyse in unter 2 Tagen |

Die erfindungsgemässe Verbindung erweist sich somit als vorteilhaft in einem weiteren, für eine gewerbliche Stabilisatorverbindung wichtigen Gebiet.

**Patentansprüche**

1. Verbindungen der Formel

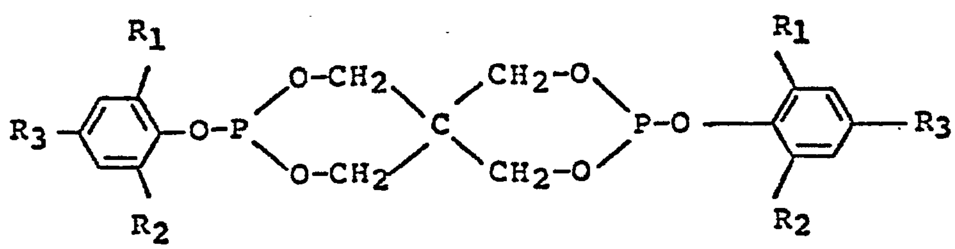

worin $R_1$ und $R_2$ unabhängig voneinander Alkyl mit 1 bis 8 Kohlenstoffatomen, $R_3$ -A-$COOR_4$, A eine direkte Bindung, Methylen oder Aethylen und $R_4$ Methyl oder Alkyl mit 12 bis 18 Kohlenstoffatomen bedeuten.

2. Verbindungen nach Anspruch 1, dadurch gekennzeichnet, dass $R_1$ und $R_2$ Alkyl mit 4 bis 8 Kohlenstoffatomen bedeuten.

3. Verbindungen nach Anspruch 2, dadurch gekennzeichnet, dass $R_1$ und $R_2$ tert.-Butyl, tert.-Pentyl oder tert.-Octyl bedeuten.

4. Verbindungen nach Anspruch 1, dadurch gekennzeichnet, dass A Aethylen bedeutet.

5. Verbindungen nach Anspruch 1, dadurch gekennzeichnet, dass $R_4$ Methyl bedeutet.

6. Verbindungen nach Anspruch 1, dadurch gekennzeichnet, dass $R_4$ Alkyl mit 12 bis 18 Kohlenstoffatomen bedeutet.

7. Verbindungen nach Anspruch 6, dadurch gekennzeichnet, dass $R_4$ Dodecyl oder Octadecyl bedeutet.

8. Bis-(2,6-di-tert.-butyl-4-octadecyloxycarbonyläthyl-phenyl)-pentaerythritdiphosphit nach Anspruch 7.

9. Bis-(2,6-di-tert.-butyl-4-methoxycarbonyläthyl-phenyl)-pentaerythritdiphosit nach Anspruch 5.

10. Bis-(2,6-di-tert.-butyl-4-n-dodecyloxycarbonyläthyl-phenyl)-pentaerythritdiphosphit nach Anspruch 7.

11. Bis-(2,6-di-tert.-butyl-4-octadecyloxycarbonyl-phenyl)-pentaerythritdiphosphit nach Anspruch 7.

12. Bis-(2,6-di-tert.-butyl-4-methoxycarbonyl-phenyl)-pentaerythritdiphosphit nach Anspruch 5.

13. Zusammensetzungen, enthaltend ein oxydativem, thermischem und/oder aktinischem Abbau unterliegendes organisches Material, und eine oder mehrere Verbindungen nach Anspruch 1 als Stabilisator.

14. Zusammensetzungen nach Anspruch 13, dadurch gekennzeichnet, dass als organisches Material ein synthetisches Polymer vorliegt.

15. Zusammensetzungen nach Anspruch 14, dadurch gekennzeichnet, dass als synthetisches Polymer ein Polyolefinhomopolymer oder -copolymer vorliegt.

16. Zusammensetzungen nach Anspruch 13, dadurch gekennzeichnet, dass sie zusätzlich ein phenolisches Antioxydans enthalten.

17. Verfahren zur Stabilisierung organischer Materialien gegen oxydativen, thermischen und aktinischen Abbau, dadurch gekennzeichnet, dass man eine wirksam stabilisierende Menge einer Verbindung nach Anspruch 1 in diese organischen Materialien einarbeitet.

18. Verfahren zur Herstellung von Pentaerythritdiphosphiten der Formel

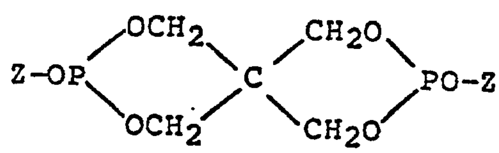

worin Z Alkyl, Alkenyl, Aryl, Alkylaryl, Aralkyl oder alkanoyl-substituiertes Aryl bedeutet, wobei diese Gruppen jeweils gegebenenfalls durch Hydroxy, Alkoxy oder Halogen substituiert sind, durch Umsetzung einer Verbindung der Formel Z-OM, worin M Wasserstoff oder ein Alkali- oder Erdalkalimetall darstellt, mit 3,9-Dichlor-2,4,8,10-Tetraoxa-3,9-diphosphaspiro[5,5]undecan in Gegenwart eines Lösungsmittels und einer starken Base, dadurch gekennzeichnet, dass die Reaktion in Gegenwart einer katalytischen Menge eines Mono- oder Polyalkylenglykolätherkatalysators erfolgt.

19. Verfahren nach Anspruch 18, dadurch gekennzeichnet, dass der Mono- oder Polyalkylenglykolätherkatalysator oder Formel

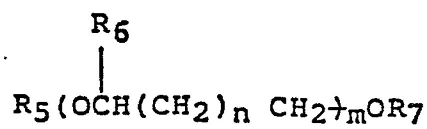

entspricht, worin $R_5$, $R_6$ und $R_7$ unabhängig voneinander Wasserstoff oder Alkyl mit 1 bis 8 Kohlenstoffatomen bedeuten, mit der Massgabe, dass höchstens eines der Symbole $R_5$ und $R_7$ für Wasserstoff steht, und n 0, 1 oder 2 und m eine Zahl von 1 bis 9 bedeuten.

20. Verfahren nach Anspruch 19, dadurch gekennzeichnet, dass als Polyalkylenglykoläther Triäthylenglykoldimethyläther oder Tetraäthylenglykoldimethyläther verwedet wird.

21. Verfahren nach Anspruch 18, dadurch gekennzeichnet, dass Z-OM für

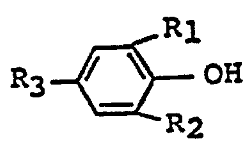

steht, worin $R_1$ und $R_2$ unabhängig voneinander Alkyl mit 1 bis 8 Kohlenstoffatomen, $R_3$ A-$COOR_4$, A eine direkte Bindung, Methylen oder Aethylen und $R_4$ Methyl oder Alkyl mit 12 bis 18 Kohlenstoffatomen bedeuten.

22. Verfahren nach Anspruch 21, dadurch gekennzeichnet, dass Z-OM für 3,5-Di-tert.-butyl-4-hydroxyhydrozimtsäure-n-octadecylester steht.

23. Verfahren nach Anspruch 18, dadurch gekennzeichnet, dass der Katalysator in einer Konzentration von 1 bis 30 Mol %, bezogen auf den Phenolreaktionspartner, vorliegt.

24. Verwendung von in Anspruch 1 definierten Verbindungen zum Stabilisieren von gegen oxidativen, thermischen oder lichtinduzierten Abbau empfindlichen organischen Materialien, insbesondere von synthetischen Polymeren.

25. Verwendung nach Anspruch 24 zum Stabilisieren von Polyolefinen.

**Claims**

1. A compound of the formula

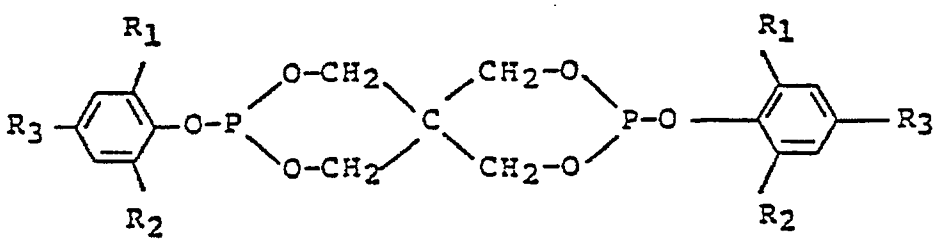

in which $R_1$ and $R_2$ are independently of one another alkyl of 1 to 8 carbon atoms, $R_3$ is $-A-COOR_4$, A is a direct bond, methylene or ethylene and $R_4$ is methyl or alkyl of 12 to 18 carbon atoms.

2. A compound according to claim 1, wherein $R_1$ and $R_2$ are alkyl of 4 to 8 carbon atoms.

3. A compound according to claim 2, wherein $R_1$ and $R_2$ are tert-butyl, tert-pentyl or tert-octyl.

4. A compound according to claim 1, wherein A is ethylene.

5. A compound according to claim 1, wherein R4 is methyl.

6. A compound according to claim 1, wherein $R_4$ is alkyl of 12 to 18 carbon atoms.

7. A compound according to claim 6, wherein $R_4$ is dodecyl or octadecyl.

8. Bis-(2,6-di-tert-butyl-4-octadecyloxycarbonylethylphenyl)pentaerythritol diphosphite according to claim 7.

9. Bis-(2,6-di-tert-butyl-4-methoxycarbonylethylphenyl)-pentaerythritol diphosphite according to claim 5.

10. Bis-(2,6-di-tert-butyl-4-n-dodecyloxycarbonylethylphenyl)pentaerythritol diphosphite according to claim 7.

11. Bis-(2,6-di-tert-butyl-4-octadecyloxycarbonylphenyl)-pentaerythritol disphosphite according to claim 7.

12. Bis-(2,6-di-tert-butyl-4-methoxycarbonylphenyl)-pentaerythritol diphosphite according to claim 5.

13. A composition containing an organic material subject to oxidative, thermal and/or actinic degradation, and one or more compounds according to claim 1 as stabilizer.

14. A composition according to claim 13, wherein the organic material is a synthetic polymer.

15. A composition according to claim 14, wherein the synthetic polymer is a polyolefin homopolymer or copolymer.

16. A composition according to claim 13, which additionally contains a phenolic antioxidant.

17. A method for stabilizing an organic material against oxidative, thermal and actinic degradation which comprises incorporating into this organic material an effective stabilizing amount of a compound according to claim 1.

18. A process for the preparation of a pentaerythritol diphosphites of the formula

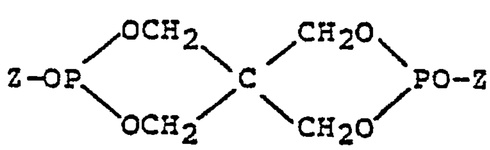

in which Z is alkyl, alkenyl, aryl, alkylaryl, aralkyl or alkanoylsubstituted aryl, each of these groups being optionally substituted by hydroxyl, alkoxy or halogen, by reacting a compound of the formula Z–OM, in which M is hydrogen or an alkali metal or alkaline earth metal with 3,9-dichloro-2,4,8,10-tetraoxa-3,9-diphosphaspiro[5,5]undecane in the presence of a solvent and a strong base, which comprises conducting the reaction in the presence of a catalytic amount of a mono- or polyalkylene glycol ether catalyst.

19. A process according to claim 18, wherein the mono- or polyalkylene glycol ether catalyst corresponds to the formula

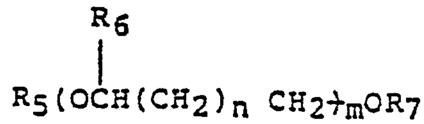

in which $R_5$, $R_6$ and $R_7$, independently of one another are hydrogen or alkyl of 1 to 8 carbon atoms, provided that not more than one of the symbols $R_5$ and $R_7$, is hydrogen, and n is 0, 1 or 2 and m is a number from 1 to 9.

20. A process according to claim 19, wherein the polyalkylene glycol ether used is triethylene glycol dimethyl ether or tetraethylene glycol dimethyl ether.

21. A process according to claim 18, wherein Z–OM is

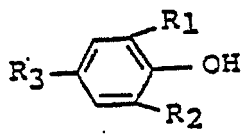

in which $R_1$ and $R_2$ independently of one another are alkyl of 1 to 8 carbon atoms, $R_3$ is A–$COOR_4$, A is a direct bond, methylene or ethylene and $R_4$ is methyl or alkyl of 12 to 18 carbon atoms.

22. A process according to claim 21, wherein Z–OM is n-octadecyl 3,5-ditert-butyl-4-hydroxyhydrocinnamate.

23. A process according to claim 18, wherein the catalyst is present in a concentration of from 1 to 30 mole%, based on the phenol reactant.

24. Use of a compound defined in claim 1 for stabilizing an organic material sensitive to oxidative, thermal or light-induced degradation, in particular for stabilizing a synthetic polymer.

25. Use according to claim 24 for stabilizing a polyolefin.

**Revendications**

1. Composés de formule

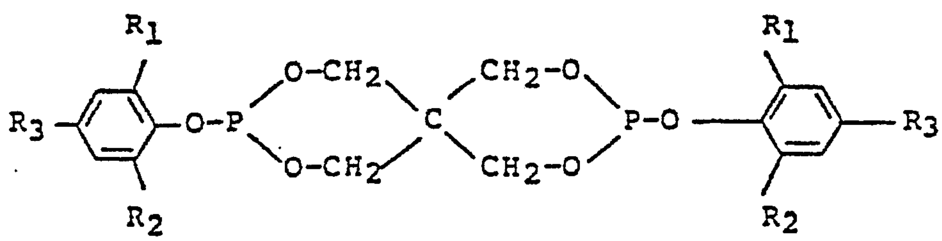

dans laquelle $R_1$ et $R_2$, indépendamment l'un de l'autre, sont chacun un radical alkyle ayant de 1 à 8 atomes de carbone, $R_3$ est –A–$COOR_4$, A est une liaison directe, un radical méthylène ou éthylène, et $R_4$ est le radical méthyle ou un radical alkyle ayant de 12 à 18 atomes de carbone.

2. Composés selon la revendication 1, caractérisés en ce que $R_1$ et $R_2$ représentent chacun un radical alkyle ayant de 4 à 8 atomes de carbone.

3. Composés selon la revendication 2, caractérisés en ce que $R_1$ et $R_2$ sont chacun le radical tert-butyle, tertpentyle ou tert-octyle.

4. Composés selon la revendication 1, caractérisés en ce que A est un radical éthylène.

5. Composés selon la revendication 1, caractérisés en ce que $R_4$ est le radical méthyle.

6. Composés selon la revendication 1, caractérisés en ce que $R_4$ est un radical alkyle ayant de 12 à 18 atomes de carbone.

7. Composés selon la revendication 6, caractérisés en ce que $R_4$ est le radical dodécyle ou octadécyle.

8. Pentaérythritoldiphosphite de bis-(di-tert-butyl-2,6 octadécyloxycarbonyléthyl-4 phényle) selon la revendication 7.

9. Pentaérythritoldiphosphite de bis-(di-tert-butyl-2,6 méthoxycarbonyléthyl-4 phényle) selon la revendication 5.

10. Pentaérythritoldiphosphite de bis-(di-tert-butyl-2,6 n-dodécyloxycarbonyléthyl-4 phényle) selon la revendication 7.

11. Pentaérythritoldiphosphitede bis-(di-tert-butyl-2,6 octadécyloxycarbonyl-4 phényle) selon la revendication 7.

12. Pentaérythritoldiphosphite de bis-(di-tert-butyl-2,6 méthoxycarbonyl-4 phényle) selon la revendication 5.

13. Compositions contenant une substance organique soumise à dégradation par oxydation, thermique et/ou actinique, et comme stabilisateur un ou plusieurs composés selon la revendication 1.

14. Compositions selon la revendication 13, caractérisées en ce que la substance organique est un polymère synthétique.

15. Compositions selon la revendication 14, caractérisées en ce que le polymère synthétique est un homopolymère ou copolymère polyoléfinique.

16. Compositions selon la revendication 13, caractérisées en ce qu'elles contiennent en outre un antioxydant phénolique.

17. Procédé pour la stabilisation de substances organiques contre une dégradation par oxydation, thermique et actinique, caractérisé en ce qu'on incorpore dans ces substances organiques une quantité à effet stabilisateur d'un composé selon la revendication 1.

18. Procédé pour la préparation de pentaérythritoldiphosphites de formule

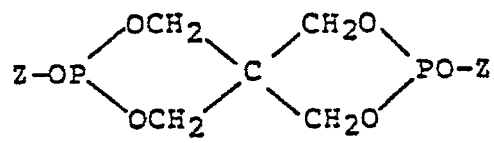

dans laquelle Z est un radical alkyle, alcényle, aryle, alkylaryle, aralkyle ou arylalcanoyle substitué, ces groupes étant chacun éventuellement substitué par un radical hydroxy, alcoxy ou halogéno, par réaction d'un composé de formule Z–OM dans laquelle M est un hydrogène ou un métal alcalin ou alcalino-terreux, avec du dichloro-3,9 tétraoxa-2,8,10 diphospha-3,9 spiro[5,5]undécane en présence d'un solvant et d'une base forte, caractérisé en ce que la réaction a lieu en présence d'une quantité catalytique d'un catalyseur à base d'un éther de mono- ou de polyalkylèneglycol.

19. Procédé selon la revendication 18, caractérisé en ce que le catalyseur à base d'un éther de mono- ou polyalkylèneglycol correspond à la formule

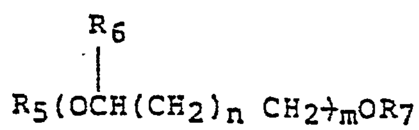

dans laquelle $R_5$, $R_6$ et $R_7$, indépendamment les uns des autres, sont chacun un hydrogène ou un radical alkyle ayant de 1 à 8 atomes de carbone, à la condition qu'a plus l'un des radicaux $R_5$ et $R_6$ soit un hydrogène, et n vaut 0, 1 ou 2, et m est un nombre de 1 à 9.

20. Procédé selon la revendication 19, caractérisé en ce qu'on utilise comme éther de polyalkylèneglycol l'éther diméthylique du triéthylèneglycol ou l'éther diméthylique du tétraéthylèneglycol.

21. Procédé selon la revendication 18, caractérisé en ce que Z–OM est

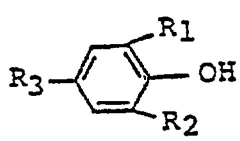

où $R_1$ et $R_2$, indépendamment l'un de l'autre, sont chacun un radical alkyle ayant de 1 à 8 atomes de carbone, $R_3$ est $A–COOR_4$, A est une liaison directe, un radical méthylène ou éthylène, et $R_4$ est un radicai méthyle ou alkyle ayant de 12 à 18 atomes de carbone.

22. Procédé selon la revendication 21, caractérisé en ce que Z–OM est l'ester n-octadécylique de l'acide di-tert-butyl-3,5 hydroxy-4 hydroxycinnamique.

23. Procédé selon la revendication 18, caractérisé en ce que le catalyseur est présent en une concentration de 1 à 30% en moles par rapport au partenaire réactionnel phénol.

24. Utilisation de composés définis dans la revendication 1 pour la stabilisation, contre la dégradation par oxydation, thermique ou induite par la lumière, de substances organiques sensibles, en particulier de polymères synthétiques.

25. Utilisation selon la revendication 24 pour la stabilisation de polyoléfines.